# EUROPEAN PATENT APPLICATION

(11) **EP 1 958 849 A1**
(43) Date of publication of application: **20.08.2008**
(21) Application number: 06833021.6
(22) Date of filing: 21.11.2006
(51) Int. Cl.: B62D 1/04, B60R 16/02, B60R 16/027, B60R 21/16, H01H 9/06, H01H 13/08

(54) **STEERING WHEEL**

(30) Priority: 07.12.2005 JP 2005352889
(71) Applicant: TAKATA CORPORATION, Minato-ku, Tokyo 106-8510 (JP)
(72) Inventor: SAKAGUCHI, Yoshichika, Tokyo 106-8510 (JP); SATO, Takeshi, Tokyo 106-8510 (JP); AMAMORI, Ichiro, Tokyo 106-8510 (JP); OKAMOTO, Kunio, Tokyo 106-8510 (JP)
(74) Representative: Sticht, Andreas
(86) International application number: PCT/JP2006/323171
(87) International publication number: WO 2007/066507

(57) **Abstract**

[Object] To provide a steering wheel allowing an occupant to easily operate operation elements while keeping the palm in contact with a steering rim for improving both safety and operability.

[Means for Solution] A steering wheel is provided with substantially a ring-like steering rim 2 to be gripped by an occupant, palm rests 10L and 10R each in contact with at least a portion of a palm of the occupant, a plurality of operation buttons 15La, 15Lb, 15Lc, and 15Ra, 15Rb, 15Rc disposed near the palm rests 10L and 10R and inclined away farther from the occupant as they are directed inward of the steering rim 2 in the radial direction, and an airbag unit 7 provided in the steering rim 2 for deploying the airbag in the event of the emergency.

## Description

### Technical Field

The present invention relates to a steering wheel in an automobile for steering operations.

### Background Art

Recently, increasing number of such operation elements as buttons and switches have been equipped in a vehicle interior accompanied with the trend of the sophisticated multi-functional vehicle provided with various types of on-board units. The operation elements of the on-board units may be installed on a surface of a steering wheel for running controls, which faces the occupant (hereinafter referred to as a front side).

A generally employed steering wheel has been well known, which is provided with substantially a ring-like steering rim (ring), a boss portion (pad) provided at substantially the center of the inner radial side of the steering rim, a plurality of spokes provided between the boss portion and the steering rim, and at least one operation element (operating portion) provided on the boss portion or the front side of the spoke (for example, see Patent Document 1).
[Patent Document 1] Japanese Unexamined Patent Application Publication No. 2004-220982

### Disclosure of the Invention

### Problems to be Solved by the Invention

The generally employed steering wheel includes a plurality of operation elements arranged on the same plane as the one that includes the steering rim (center axis)(In other words, it is structured such that the height of the steering rim in the axial direction of the steering shaft becomes substantially the same as that of the operation element).

In the case where the steering wheel is structured to have the steering rim and the operation elements on substantially the same plane, and the operation elements are operated by the occupant's thumb while gripping the steering rim, at least a part of the palm of the occupant's hand that grips the steering rim (especially, a ball of the thumb) is likely to be released from the steering rim. In the case of the generally employed steering wheel including a plurality of operation elements, the occupant who grips the steering rim is expected to turn his/her thumb around its ball to reach the plurality of operation elements. Accordingly, the occupant's palm (or part thereof) is more likely to be released from the steering rim. The state where the occupant's palm (or part thereof) is released from the steering rim indicates the state of almost one-handed steering operation for driving, thus causing safety problem. Meanwhile, in the case where the occupant tries to operate the operation elements so as not to release his/her palm (or part thereof) while firmly gripping the steering rim, such uneasy action may deteriorate the operability. The generally employed structure, thus, fails to satisfy requirements for both safety and operability.

Accordingly, the object of the present invention is to provide a steering wheel that improves both safety and operability by allowing the occupant to operate the operation elements easily while keeping his/her palm in contact with the steering rim.

### Means for Solving the Problems

In order to achieve the object, the first invention of the present invention includes substantially a ring-like steering rim to be gripped by an occupant, a palm rest disposed near a portion of the steering rim to be gripped by the occupant, and brought into contact with at least a portion of a palm of the occupant, at least one operation element that is provided near the palm rest and inclined to be away farther from the occupant as it is directed inward of the steering rim in a radial direction for operating an on-board unit, and an airbag unit that is provided inside the steering rim in the radial direction to deploy an airbag in emergency situations.

Generally, in order to operate the on-board units with the operation elements on the steering wheel, the occupant grips the steering rim and uses his/her thumb to operate the operation elements while keeping his/her palm in contact with the palm rest.

In the first invention of the present invention, the operation element is inclined to be away from the occupant farther as it is directed inward of the steering rim in the radial direction. Accordingly, unlike the structure in which the operation elements are disposed on the same plane as that of the steering rim, the structure of the present invention allows the occupant to easily operate the operation elements with his/her thumb without releasing the palm from the palm rest while gripping the steering rim. This makes it possible to improve the operability and safety by preventing one-handed driving during the operation of the operation elements.

As the operation element is inclined, chance of the operation error due to the contact with the arm of the occupant may be reduced. Even in the event of the crash against the vehicle, it may be structured to prevent the occupant from having the head hit with the operation element.

In order to achieve the aforementioned object, the second invention includes substantially a ring-like steering rim to be gripped by an occupant, a palm rest disposed near a portion of the steering rim to be gripped by the occupant, and brought into contact with at least a portion of a palm of the occupant, at least one operation element that is provided so as to be operated by the occupant who grips the steering rim while keeping the palm in contact with the palm rest for operating an on-board unit, and an airbag unit that is provided inside the steering rim in the radial direction.

Generally, when the on-board unit is operated with the operation elements on the steering wheel, the occupant grips the steering rim and uses his/her thumb for the operation while keeping his/her palm in contact with the palm rest.

In the second invention, unlike the structure in which the operation elements are provided on the same plane as that of the steering rim, as the operation elements are provided so as to be easily operated by the occupant who grips the steering rim while keeping his/her palm in contact with the palm rest, the occupant is allowed to operate the operation element with his/her thumb easily without releasing the palm from the palm rest while gripping the steering rim. This makes it possible to improve the operability and safety by preventing the occupant from performing the one-handed driving during operation of the operation element.

In the third invention according to the first or the second invention, the palm rest is provided at an inclined angle smaller than that of the operation element.

In the third invention, the palm rest is provided to be inclined at the inclined angle smaller than that of the operation element. This allows the palm rest to be provided substantially in parallel with the plane that includes the steering rim. As a result, when the occupant grips the steering rim, his/her palm is naturally brought into contact with the palm rest. This makes it possible to improve the operability of the steering wheel and realize the comfortable gripping position, thus reducing the fatigue of the occupant.

In the fourth invention according to any one of the first to the third inventions, a plurality of the operation elements are provided and arranged in substantially a longitudinal direction along the steering rim.

Generally, the occupant grips left and right sides of the steering rim for steering the vehicle. In the case where the steering wheel is equipped with a plurality of operation elements, the occupant who grips the left and right sides of the steering rim turns his/her thumb around its ball in substantially a longitudinal direction to reach those operation elements while keeping his/her palm in contact with the palm rest. In the fourth invention, the plurality of operation elements are provided in substantially a longitudinal arrangement. This makes it possible to arrange the operation elements to substantially trace the movement path of the fingertip of the occupant's thumb. Accordingly, the operability may further be improved.

In the fifth invention according to any one of the first to fourth inventions, a surface of the operation element has a recess portion.

According to the fifth invention, each surface of the operation element includes a recess portion which serves to suppress slippage of the fingertip of the occupant's thumb during the operation, thus further improving the operability. As the fingertip of the occupant is likely to fit with the operation elements, the operation feel may be improved.

In the sixth invention, a surface of the palm rest opposite the occupant has a recess portion that accommodates a finger of the occupant.

In the sixth invention, the surface of the palm rest opposite the occupant includes a recess portion for accommodating fingers of the occupant. The occupant is allowed to grip the steering rim while keeping three fingers, for example, index finger, middle finger, and ring finger fit with the recess portion, thus improving the gripping property of the steering rim. As a result, the occupant is capable of gripping the steering rim firmly while operating the operation elements with the thumb, thus further improving the operability.

In the seventh invention according to the first to the sixth inventions, the palm rest is integrally formed with the steering rim.

This makes it possible to realize the simple structure that can be in contact with the occupant's palm without providing further parts as additional members or complicating the structure.

In the eighth invention according to the first to the seventh invention, an intersection of a first plane formed by connecting top portions of the steering rim and a second plane formed to substantially include an upper surface of the operation element is positioned inside of an outer circumferential circle of the steering rim in the radial direction.

This makes it possible to increase the inclined angle of the operation element to allow the occupant to operate the operation element with his/her thumb while keeping the palm in contact with the palm rest.

In the ninth invention according to the eighth invention, the second plane is provided such that an angle formed with the first plane is in a range from the angle equal to or larger than 20° to the angle equal to or smaller than 70°.

This makes it possible to increase the inclined angle of the operation element to allow the occupant to operate the operation element with his/her thumb while keeping the palm in contact with the palm rest.

In the tenth invention according to the eighth or the ninth invention, the operation element is provided at a position such that a distance between the operation element and a center axis of the steering wheel in the radial direction becomes equal to or smaller than 0.75r, where r represents a radius of the outer circumferential circle.

The operation elements are positioned at the center of the steering wheel in the radial direction relatively apart from the palm rest. This allows the occupant to operate the operation elements with his/her thumb while keeping the palm in contact with the palm rest.

### Advantages

According to the present invention, the occupant is allowed to operate the operation elements while keeping the occupant's palm in contact with the steering rim for improving both safety and operability.

### Brief Description of the Drawings

[Fig. 1] Fig. 1 is a plan view of an entire structure of a steering wheel according to a first embodiment of the present invention;
[Fig. 2] Fig. 2 is a cross sectional view taken on line II-II of Fig. 1;
[Fig. 3] Fig. 3 is a view showing operations of an occupant's hand for operating the operation buttons;
[Fig. 4] Fig. 4 is a plan view showing an entire structure of a steering wheel as a modified example, in which the operation buttons are arranged to form an arc shape;
[Fig. 5] Fig. 5 is a cross sectional view of a steering wheel as a modified example in which the portion from the palm rest to the spoke is formed into an arc shape; and
[Fig. 6] Fig. 6 is a plan view of an entire structure of a steering wheel as a modified example in which the steering rim is integrally formed with the palm rest.

### Reference Numerals

2 steering rim
2' steering rim
7 airbag unit
10L, 10r palm rest
10L', 10R' palm rest
12L, 12R recess portion
15L, 15R operation button (operation element)
15L', 15R' operation button (operation element)
15L", 15R" operation button (operation element)
II palm

### Best Mode for Carrying Out the Invention

An embodiment of the present invention will be further illustrated referring to the drawings.

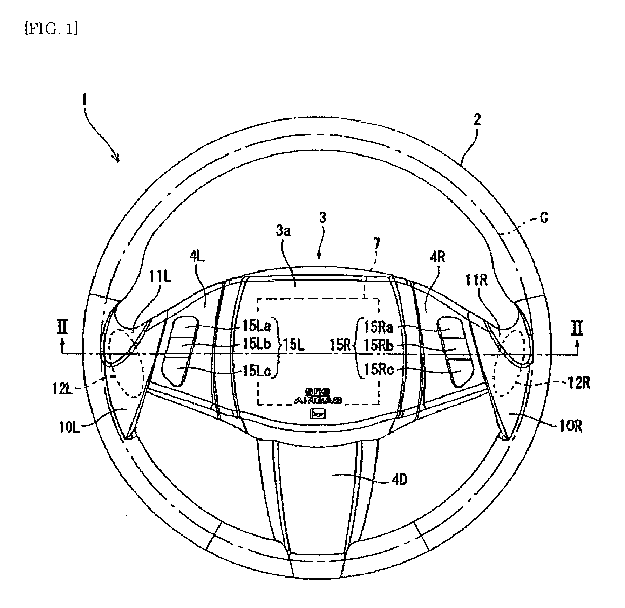

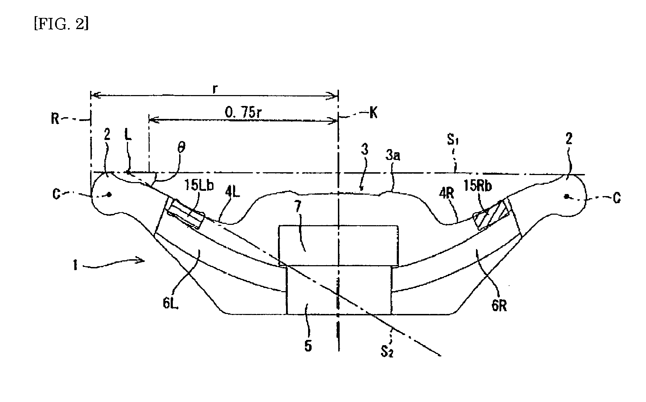

Fig. 1 is a plan view showing an entire structure of a steering wheel according to the embodiment. Fig. 2 is a cross sectional view taken on line II-II shown in Fig. 1. The steering wheel is normally inclined at a predetermined angle so as to be operated. The side of the steering wheel that faces the occupant (the front side shown in Fig. 1, and upper portion of Fig. 2) will be called as a front side, and the other side of the steering wheel (the reverse side shown in Fig. 1, and lower portion of Fig. 2) will be called as a back side. The radial and axial directions indicate those with respect to the shaft of the steering wheel as the center.

Referring to Figs. 1 and 2, a steering wheel 1 is provided with substantially a ring-like steering rim 2, a hub 3 disposed at substantially the center of the steering rim 2, and a plurality of spokes 4 (three spokes in the embodiment) that connect the hub 3 to the steering rim 2. The spokes 4 include a spoke 4L disposed to the left (left in Fig. 1) of the hub 3, a spoke 4R disposed to the right (right in Fig. 1) of the hub 3, and a spoke 4D disposed at the lower side (lower side in Fig. 1) of the hub 3.

The hub 3 contains substantially a cylindrical boss cored bar member 5 connected to a steering shaft (not shown) therein. The boss cored bar member 5 is linked to a rim cored bar member (not shown) contained within the steering rim 2 with three spoke cored bar members 6L, 6R, and 6D (6D is not shown) within the spokes 4L, 4R and 4D.

The hub 3 also contains an airbag unit 7 formed of a bag-like airbag (not shown) and an inflator that injects gas for inflating the airbag. A vehicle in which the steering wheel 1 of the embodiment is installed is provided with various types of sensors for detecting occurrence (or prediction) of crash of the vehicle (including side impact), and overturn. An inflator control circuit (not shown) activates an initiator of the inflator based on detection signals of the aforementioned sensors. Upon activation of the initiator, the inflator injects gas such that the airbag tears a cover 3a of the hub 3 to inflate toward the occupant.

Portions of the steering rim 2 connected to the spokes 4L and 4R are provided with palm rests 10L and 10R, respectively. Those palm rests 10L and 10R are formed substantially in parallel (or may be slightly inclined) with the plane that includes the steering rim 2 (specifically, the center axis C). Upper portions of the palm rests 10L and 10R (upper side in Fig. 1) are provided with finger rests 11L and 11R which are brought into contact with thumbs of the occupant who grips the steering rim 2. Back sides of the palm rests 10L and 10R are provided with recess portions 12L and 12R that accommodate fingers other than thumbs (for example, index fingers, middle fingers and ring fingers) of the occupant who grips the steering rim 2.

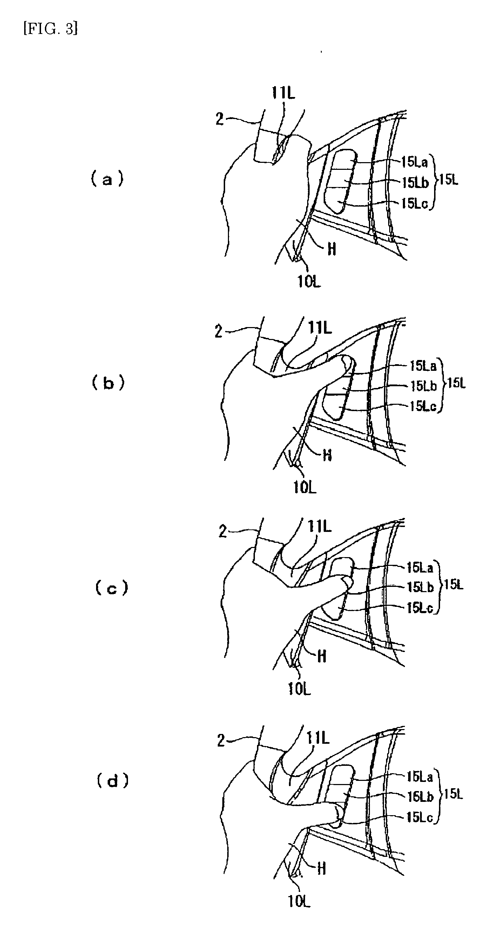

The occupant normally grips the steering rim 2 while holding the thumbs in contact with the finger rests 11L and 11R, and fitting fingers other than the thumbs (for example, three fingers including index fingers, middle fingers and ring fingers) with the recess portions 12L and 12R formed on the back sides. At this time, the occupant's palms (especially, balls of the thumbs) contact with the palm rests 10L and 10R, respectively (see Fig. 3(a)).

The spokes 4L and 4R are inclined from the palm rests 10L and 10R of the steering rim 2 to the hub 3 so as to be away farther from the occupant as they are directed inward of the steering rim in the radial direction (that is, those portions are inclined toward the back side of the steering wheel). Operation buttons (switches) 15L and 15R (operation elements) for operating the on-board units (for example, air conditioning unit, audio unit and the like) installed in the vehicle according to the embodiment are provided on the upper surfaces of the spokes 4L and 4R, respectively. A switch unit (not shown) for connecting and disconnecting the circuit with, for example, a moveable contact is provided at the lower portions of the operation buttons 15L and 15R.

The operation buttons 15L and 15R are inclined to be away farther from the occupant as they are directed inward of the steering rim in the radial direction in the same way as the spokes 4L and 4R (that is, they are inclined toward the back side of the steering wheel). The inclined angles are set to be larger than those of at least the palm rests 10R and 10L. Those operation buttons 15L and 15R include a plurality of operation buttons (each three in the embodiment) 15La, 15Lb, 15Lc, and 15Ra, 15Rb, 15Rc, respectively. Those operation buttons 15La, 15Lb, 15Lc, and 15Ra, 15Rb, 15Rc are aligned linearly in substantially the longitudinal direction (up-and-down direction in Fig. 1) along the adjacent substantially arc portion of the steering rim 2. Each surface of those operation buttons 15La to 15Rc has, for example, a recess portion formed to be fit with the thumb of the occupant (see Fig. 2).

In the aforementioned example, a point L as the intersection of a first plane S1 formed by connecting top points of the steering rim 2 and a second plane S2 formed to substantially include the upper surfaces of the operation buttons 15La to 15Rc is positioned inside the outer circumferential circle R of the steering rim 2 in the radial direction. The angle θ formed by the second plane S2 and the first plane S1 is set to be in the range, that is, 20° ≤ θ ≤ 70° (approximately 35° in the example). This makes it possible to further increase the inclined angles of the operation buttons 15La to 15Rc, so as to allow the occupant to use his/her thumbs for operations while keeping the palms in contact with the palm rests 10L and 10R.

In the embodiment, assuming that a radius of the outer circumferential circle R is r, the operation buttons 15La to 15Rc, and the switch unit are arranged in the radial direction such that the distance with respect to the center axis K of the steering wheel 1 in the radial direction becomes 0.75r or smaller. In this way, the operation buttons 15La to 15Rc are arranged at the center of the steering wheel 1 in the radial direction relatively away from the palm rests 10L and 10R, respectively. This allows the occupant to use his/her thumbs to operate the operation buttons 15La to 15Rc while keeping the palms in contact with the palm rests 10L and 10R.

Fig. 3 shows the manual operation of the operation button 15 arranged on the thus structured steering wheel 1. More specifically, the operation button 15L is operated by the occupant with the left hand.

During the normal steering operation, the occupant grips the steering rim 2 while holding the finger rest 11L with his/her thumb as shown in Fig. 3(a). At this time, the occupant's palm H (especially ball of the thumb) is in contact with the palm rest 10L.

In order to operate the operation button 15La, the occupant moves the thumb toward the operation button 15La while gripping the steering rim 2 and keeping the palm H in contact with the palm rest 10L as shown in Fig. 3(b).

In order to operate the operation button 15Lb, the occupant then turns the ball of the thumb to direct the fingertip downward in substantially the longitudinal direction (downward in Fig. 3) while gripping the steering rim 2 and keeping the palm H in contact with the palm rest 10L as shown in Fig. 3(c) such that the thumb reaches the operation button 15Lb for operation.

In order to operate the operation button 15Lc, the occupant further turns the ball of the thumb to direct the fingertip downward in substantially the longitudinal direction (downward in Fig. 3) while gripping the steering rim 2 and keeping the palm H in contact with the palm rest 10L as shown in Fig. 3(d) such that the thumb reaches the operation button 15Lc for operation.

Although not shown in Figs. 3(a) to 3(d), the occupant grips the steering rim 2 and performs the aforementioned operations while fitting other fingers (for example, three fingers, that is, index finger, middle finger, and ring finger) with the recess portion 12L formed on the back side.

In the event of an emergency like a vehicle crash, the airbag unit 7 of the steering wheel 1 according to the embodiment is activated. In other words, when the aforementioned sensors detect the emergency, the activation signal is input to the initiator of the inflator from the inflator control circuit. The initiator is then activated to operate the inflator to inject gas for inflating the airbag. In this case, the cover 3a of the hub 3 is torn along a tear line (not shown) formed on the back surface such that the airbag deploys toward the occupant.

The thus structured steering wheel 1 provides advantages as described below.

In the embodiment, the operation buttons 15L and 15R are inclined to be away farther from the occupant as they are directed inward of the steering rim 2 in the radial direction. Compared with the structure in which the operation buttons are disposed on substantially the same plane as that of the steering rim, the structure according to the embodiment allows the occupant to operate the operation button 15 with his/her thumb easily without releasing the palm H from the palm rest 10 while gripping the steering rim 2. This makes it possible to improve the operability. As the one-handed driving during the operation of the operation elements is prevented, the driving safety may also be improved. The inclined buttons 15L and 15R may reduce the chance of operational errors due to the contact with the occupant's arm. The buttons 15L and 15R are arranged so as not to be hit with the occupant's head in the event of the vehicle crash.

In the embodiment, the palm rest 10 is provided in substantially parallel with the plane that includes the steering rim 2 (correctly, its center axis C)(in the case where it is inclined, the inclined angle is smaller than that of the operation button 15). This allows the occupant to naturally contact the palm H with the palm rest 10 while gripping the steering rim 2, thus improving operability of the steering wheel 1 and reducing fatigue of the occupant resulting from the conformable gripping position.

In the embodiment, the operation buttons 15La, 15Lb, 15Lc, and 15Ra, 15Rb, 15Rc are aligned in substantially a longitudinal direction along the arc shaped portion of the steering rim 2. Accordingly the operation buttons may be aligned to substantially trace the movement of the fingertip of the thumb of the occupant, thus further improving the operability.

In the embodiment, each surface of the operation buttons 15La, 15Lb, 15Lc, and 15Ra, 15Rb, 15Rc includes a recess portion to reduce the slippage of the fingertip during the operation for further improving the operability. As the fingertip of the occupant is easily fit with the operation button, the operation feel may further be improved.

In the embodiment, the recess portion 12 is formed on the back side of the palm rest 10. This allows the occupant to fit three fingers, for example, index finger, middle finger, and ring finger with the recess portion 12 on the back side of the steering wheel 1, and to insert the thumb into the finger rest 11 on the front side so as to grip the steering rim 2 while keeping the palm H in contact with the palm rest 10. This makes it possible to improve the grip property of the steering rim 2. The steering rim 2 may be firmly gripped during the operation of the operation button 15 with the thumb, thus further improving the operability.

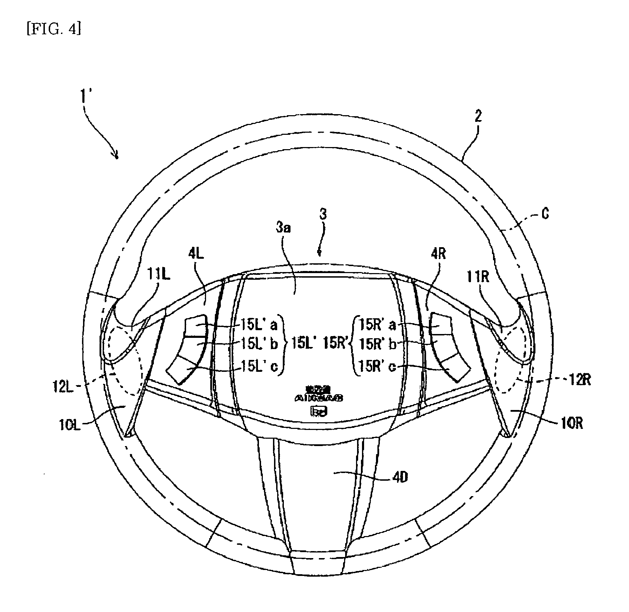

In the aforementioned example, the operation buttons 15La, 15Lb, 15Lc, and 15Ra, 15Rb, 15Rc are linearly aligned in substantially the longitudinal direction. However, the invention is not limited to the aforementioned structure. For example, operation buttons 15L'a, 15L'b, 15L'c, and 15R'a, 15R'b, 15R'c are arranged to form arc shapes, respectively as shown in Fig. 4 that illustrates a steering wheel 1'. In this case, the operation buttons may be arranged to further closely trace the movement path of the fingertip of the thumb of the occupant for the purpose of obtaining the same advantages as those of the aforementioned embodiment. This makes it possible to further improve the operability compared with the aforementioned embodiment.

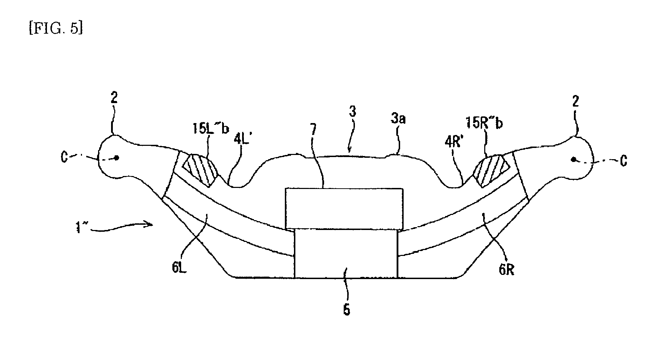

In the aforementioned structure, the palm rests 10L and 10R are provided in substantially parallel with the plane that includes the steering rim 2 (or slightly inclined), and the spokes 4L, 4R and the operation buttons 15L, 15R are provided at the respective inclined angles larger than those of the palm rests 10. However, the invention is not limited to the structure as described above. For example, like the steering wheel 1" shown in Fig. 5, the cross section surface from the palm rest (not shown) to the spokes 4L' and 4R' may form an arc shape. In this case, the operation buttons 15"L and 15"R may be provided farther away from the occupant as they are directed inward in the radial direction, thus providing the same advantages as those of the aforementioned embodiment. In the modified example, it is preferable to form a convex portion on each surface of the operation buttons 15"L and 15"R (only 15"Lb and 15"Rb are shown) in consideration for the operability as shown in Fig. 5.

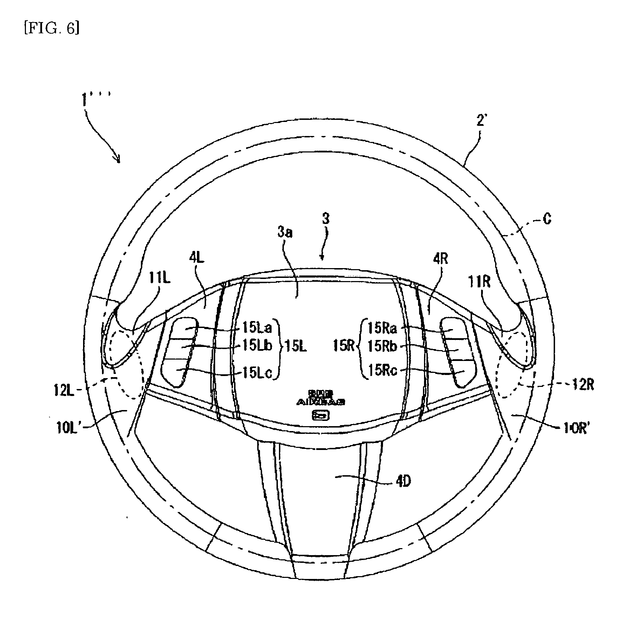

In the aforementioned examples, the steering rim 2 and the palm rest 10 may be formed as independent members. However, the present invention is not limited to the aforementioned structure. For example, like the steering wheel 1''' shown in Fig. 6, the steering rim 2' may be integrated with the palm rests 10L' and 10R', respectively. Alternatively, each configuration of the palm rests 10L' and 10R' is made different from that of the aforementioned palm rests 10L and 10R. Rather, they may be made smaller than the palm rests 10L and 10R. The function of the palm rest may be partially added to the steering rim 2' (in other words, the steering rim partially functions as the palm rest). In the aforementioned case, the same advantages as those of the aforementioned embodiment may be provided.

## Claims

1. A steering wheel comprising:
a substantially ring-like steering rim to be gripped by an occupant;
a palm rest disposed near a portion of the steering rim to be gripped by the occupant, and brought into contact with at least a portion of a palm of the occupant;
at least one operation element that is provided near the palm rest and inclined to be away farther from the occupant as it is directed inward of the steering rim in a radial direction for operating an on-board unit; and
an airbag unit that is provided inside the steering rim in the radial direction to deploy an airbag in emergency situations.

2. A steering wheel comprising:
a substantially ring-like steering rim to be gripped by an occupant;
a palm rest disposed near a portion of the steering rim to be gripped by the occupant, and brought into contact with at least a portion of a palm of the occupant;
at least one operation element that is provided so as to be operated by the occupant who grips the steering rim while keeping the palm in contact with the palm rest for operating an on-board unit; and
an airbag unit that is provided inside the steering rim in the radial direction.

3. The steering wheel according to Claim 1 or 2, wherein the palm rest is provided at an inclined angle smaller than that of the operation element.

4. The steering wheel according to any one of Claims 1 to 3, wherein a plurality of the operation elements are provided and arranged in substantially a longitudinal direction along the steering rim.

5. The steering wheel according to Claim 1, wherein a surface of the operation element has a recess portion.

6. The steering wheel according to any one of Claims 1 to 5, wherein a surface of the palm rest opposite to the occupant has a recess portion that accommodates a finger of the occupant.

7. The steering wheel according to any one of Claims 1 to 6, wherein the palm rest is integrally formed with the steering rim.

8. The steering wheel according to any one of Claims 1 to 7, wherein an intersection of a first plane formed by connecting top portions of the steering rim and a second plane formed to substantially include an upper surface of the operation element is positioned inside an outer circumferential circle of the steering rim in the radial direction.

9. The steering wheel according to Claim 8, wherein the second plane is provided such that an angle formed with the first plane is in a range from the angle equal to or larger than 20° to the angle equal to or smaller than 70°.

10. The steering wheel according to Claim 8 or 9, wherein the operation element is provided at a position such that a distance between the operation element and a center axis of the steering wheel in the radial direction becomes equal to or smaller than 0.75r, where r represents a radius of the outer circumferential circle.
